Europäisches Patentamt

European Patent Office

Office européen des brevets

(11) Publication number: **0 091 290**
**B1**

(12) **EUROPEAN PATENT SPECIFICATION**

(45) Date of publication of patent specification: **19.11.87**

(51) Int. Cl.⁴: **H 02 J 13/00, H 04 B 3/54**

(21) Application number: **83301846.8**

(22) Date of filing: **31.03.83**

(54) Electrical appliance control.

(30) Priority: **06.04.82 GB 8210198**

(43) Date of publication of application:
**12.10.83 Bulletin 83/41**

(45) Publication of the grant of the patent:
**19.11.87 Bulletin 87/47**

(84) Designated Contracting States:
**CH DE FR GB LI NL SE**

(56) References cited:
**GB-A-1 535 834**
**GB-A-1 592 971**
**US-A-3 942 168**

(73) Proprietor: **PICO ELECTRONICS LIMITED**
**Eastfield Industrial Estate**
**Glenrothes Fife KY7 4NH, Scotland (GB)**

(72) Inventor: **Campbell, David Chester**
**20 Victoria Road**
**Lundin Links Fife Scotland (GB)**

(74) Representative: **Godsill, John Kenneth et al**
**Haseltine Lake & Co. Hazlitt House**
**28 Southampton Buildings Chancery Lane**
**London WC2A 1AT (GB)**

Courier Press, Leamington Spa, England.

## Description

This invention relates to electrical appliance control and particularly concerns remote appliance control effected by way of digital control signals transmitted on a power main.

GB—A—1 592 971 discloses such a remote control system for electrical appliances in which receivers control the supply of power to the appliances, the receivers themselves being controlled by digital instruction signals conveyed by the power main. The instruction signals, generated by a transmitter coupled to the main, may include, in some cases, an address to identify a particular receiver to be controlled.

Preferably, each instruction or message comprises a plurality of binary bits transmitted during selected time slots relative to the zero-crossing points of the main. Specifically one set of transmission time slots occurs close to the zero-crossing points of one phase of the main. In order that the instruction or message may be coupled to other phases of the main, other sets of transmission time slots are provided close to the zero-crossing points of the other phase or phases of the main. By "close" to a zero-crossing point, we mean that at least a portion of a time slot is within one eighth (preferably one tenth) of one half cycle from a zero crossing.

In the above-mentioned GB—A—1 592 971, each bit is transmitted as the presence or absence of a high frequency (e.g. 120 KHZ) signal during the time slot. Moreover, the bits of the message are transmitted during alternate half-cycles and the inverse of those bits is transmitted during the intermediate half-cycles. Particularly, a transmission time consists of a sequence of time intervals with sections or words of a message transmitted in alternate time intervals, the intermediate intervals being long enough (preferable equal to the alternate intervals) to contain a repetition of the word. Preferably each word is also transmitted in the intermediate time intervals so that a complete message is transmitted twice.

A number of problems can occur when using such a system to control the use of energy within buildings such as factories, offices, schools and hospitals. The most common problem is low signal level at the receivers or slaves. A typical installation might have a transmitter operating on a branch circuit of a 3-phase, 60HZ, power distribution circuit, and it is required to address several receivers located on many branch circuits on all 3-phases throughout the building. Signal attenuation occurs due to range and to shunting of the signal by loads. However, the greatest loss is usually due to poor phase coupling. Phase coupling can be improved by the use of passive components such as capacitors, or transformers; however, the nett output power of the transmitter is not increased by these methods.

Other problems arise owing to the diverse types of power distribution used in such buildings, (this applies mainly in the U.S.A.). For example, two systems in common use are:

(i) the 3 phase, 4 wire 120V/208V system; and
(ii) the 3 phase, 4 wire 277V/480V system.
System (i) is used normally where motors form a substantial part of the load. System (ii) is used mainly for fluorescent lighting.

System (i) can provide 3 phase, 120V power between each of the transformer outputs and neutral. It will also supply 208V A.C. for loads connected between any pair of transformer outputs. The zero voltage crossings of the 208V connections are 30 deg. delayed from those of the respective 120V connections, (1.38m. secs. for a 60HZ system).

The pulses from a transmitter located on a 120V branch circuit would not be received by a receiver with its input circuit across one of the 208V connections because the signal time slots would not be appropriately timed. A similar problem arises for the 277V/480V system. Normally in a building the 277V system would be distributed and the 120V derived where locally required by step down transformers from one phase of the 277V. This usually introduces a 30 deg. phase shift between the local 120V systems and the 277V system.

In data transmission systems, it is known to provide a repeater in series with the data transmission path to attempt to resolve problems of low signal level.

Moreover, in a power line communication system, it is known from GB—A—1 535 834 to provide a repeater to by-pass distribution transformers at which severe signal loss can occur. Such a system uses frequency shift keying and the frequencies are changed by the repeaters. The repeaters also change the form of the signal. The system appears therefore to be inoperable in the absence of repeaters as the final receivers cannot respond to the signal as originally injected onto the main. Such a system does not therefore provide any convenient answer for an electrical appliance control system as mentioned above in connection with GB—A—1 592 971.

US—A—3 942 168 discloses a repeater in which a message in the form of an address and function is received as a single "word", stored and, on its termination, retransmitted.

Such a repeater may be generally defined as a repeater for repeating digital control message words transmitted in alternate time intervals of a sequence of time intervals on an A.C. power main, the repeater comprising means for coupling to an A.C. main to receive therefrom said message words, means for storing said received words, and means for injecting onto the main said stored words with increased amplitude in the intermediate time intervals of said sequence of time intervals, so that the message words are retransmitted on the A.C. main interleaved in time with the received words.

Such a repeater has no provision for dealing adequately with multiphase systems in which there may be poor phase coupling.

This is solved according to the present invention in that the repeater is arranged to operate with a multiphase power main having *n* phases to receive a message word from one section of the main and retransmit the message word onto another, or the same, section of the main and comprises input zero-crossing detection means for detecting the moments at which the voltages on the *n* phases of said one section of the main pass through zero, data input means for cooperating with the input detection means to identify the bits of a received word on any of the *n* phases and to store those bits in the storing means, output zero-crossing detection means for detecting the moments at which the voltages of the *n* phases of said another section pass through zero, and time slot defining means for defining, in dependence upon said moments detected by the input or output zero-crossing detection means, output time slots for each of the *n* phases for the bits of the retransmitted words in said intermediate time intervals.

In one case, the time slot defining means is coupled to be responsive to the input zero-detector means to define said output time slots relative to the zero-crossings of the phases of the input main section, so that the repeated message is suitable for injection back onto that main section or onto a main synchronised with the input main section.

The circuit could be designed to be switched between two modes, in one of which it operates to repeat onto the phases of the same main and in the other of which it repeats the data at an increased level onto all phases of another power system, which may be electrically isolated and asynchronous with the first system, because the output time slots are then defined relative to the output zero-crossing detection means coupled to the output mains section.

A further feature of the preferred embodiment is that it is not required to be inserted in series with the data path and is not unidirectional. Thus, the circuit may be coupled directly across the conductors of a power main without severing those conductors and will repeat or relay digital control signals in both directions along a main regardless of the direction of the receipt.

For a better understanding of the invention and to show how the same may be carried into effect, reference will now be made, by way of example, to the accompanying drawings, in which:

Figure 1 is a waveform diagram showing digital data received by and transmitted from a repeater circuit;

Figure 2 shows a detail of Figure 1;

Figure 3 is a circuit diagram showing one use of a repeater circuit;

Figure 4 is a block diagram of the repeater circuit;

Figures 5 and 6 show some various input, output and control elements of the repeater circuit of Figure 4; and

Figure 7 is a circuit diagram showing another use of the repeater circuit.

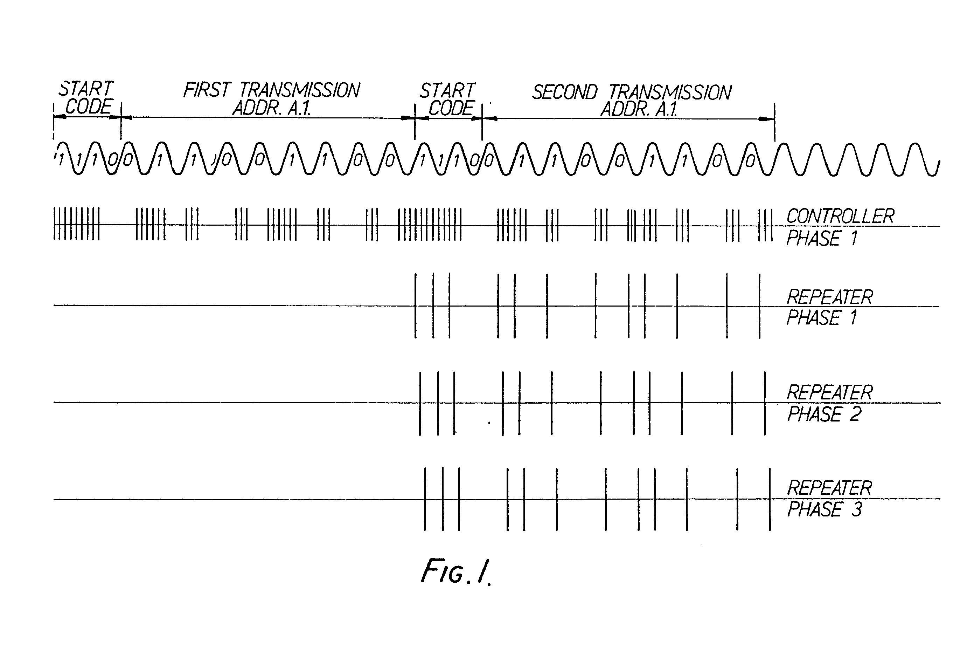

Figure 1 shows in its first and second lines the pattern of pulses from a transmitter on one phase of a three-phase system as described in the above-mentioned GB—A—1 592 971. It is assumed that a device of address A is to be switched on. Accordingly the transmitter transmits a message consisting of four digital control words, A, A, ON, ON, i.e. the address 'A' twice followed by the instruction 'ON' twice. Figure 1 shows the address transmission A, A, consisting in fact of a four-bit start code '1110' followed by the 9-bit address value '011001100'. The start code is transmitted on successive half cycles but the address value is transmitted on alternate half cycles. Intermediate half cycles convey the inverse of the address value. The duration of one message is therefore 22 half cycles.

The second line of Figure 1 indicates the corresponding data transmitted onto, say, phase P1. Each bit is transmitted as a burst at 120KHZ and is repeated twice to provide a burst substantially at the zero crossing of each phase.

The repeater circuit to be described is designed to receive that signal from any one of the phases, to separate it into its three individual phases by time slot, and to emit the three signals onto respective phases (lines 3, 4 and 5 of Figure 1) in respective time slots.

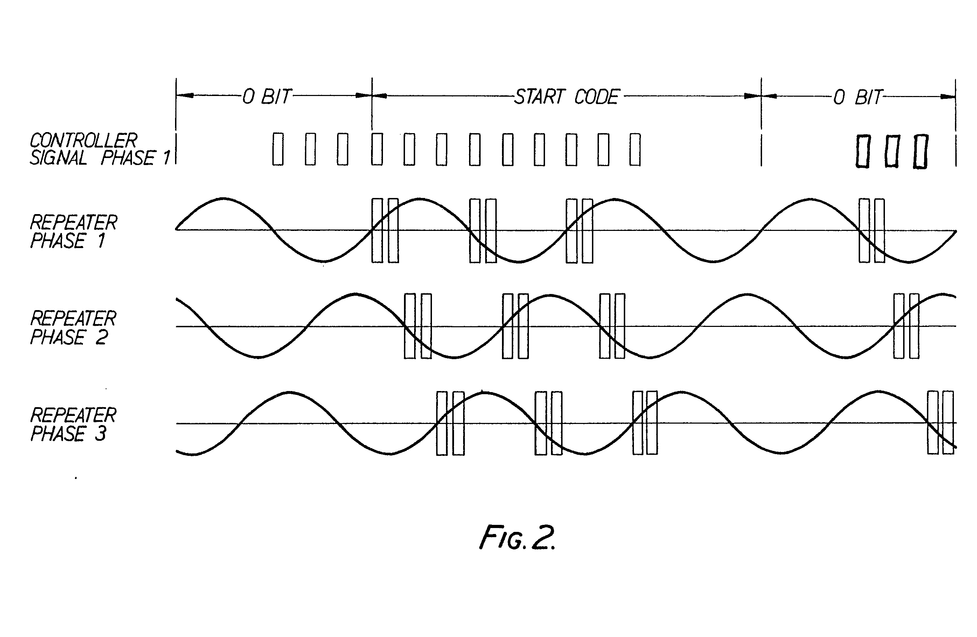

Figure 2 shows an expanded view of the signals in the time interval from near the end of one transmission of message 'A' to just beyond the beginning of its second transmission. The first line shows the signal received on phase P1 and the other lines show the repeated signals on phases P1, P2 and P3. In this figure a mode of operation is shown in which each phase has supplied to it not only its individual message in time slots near its own zero crossings but also that message displaced by 30° for coupling to any loads operating 30° from the individual phases, as described above.

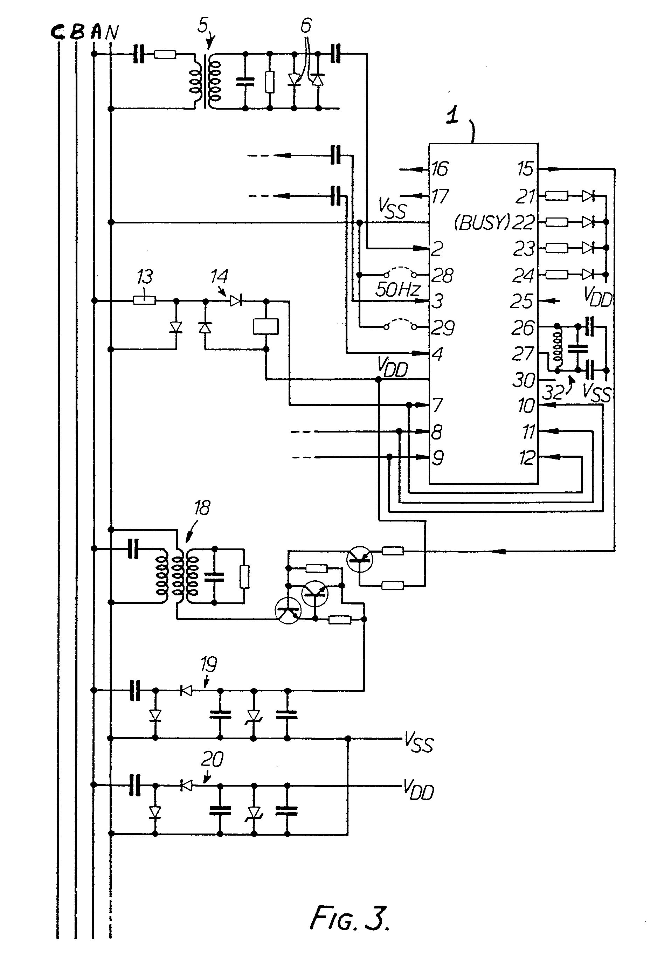

Figure 3 shows an MOS integrated circut 1 which is a repeater circuit connected, in this example, in such a way as to provide a 4 wire repeater system. Inputs 2, 3 and 4 are coupled to the phases A, B, and C by tuned circuits, tuned to 120KHZ, and one of which is shown at 5. Diodes 6 in the secondaries protect the inputs from excess voltage.

Mains trigger inputs 7, 8 and 9 are also coupled to the input phases; additional mains trigger inputs 10, 11 and 12 are provided for the output main and in this 4 wire system the two sets of trigger inputs are coupled together as the system is intended to repeat onto the same main. These inputs are coupled to the main by respective resistors 13 to detect the phase waveforms. Diode limiters 14 protect each mains trigger input.

The integrated circuit has three outputs 15, 16 and 17 coupled to respective phases by step down transformers 18 driven by transistors supplied with power by a capacitive dropper power supply 19. A second such supply 20 supplies the integrated circuit itself.

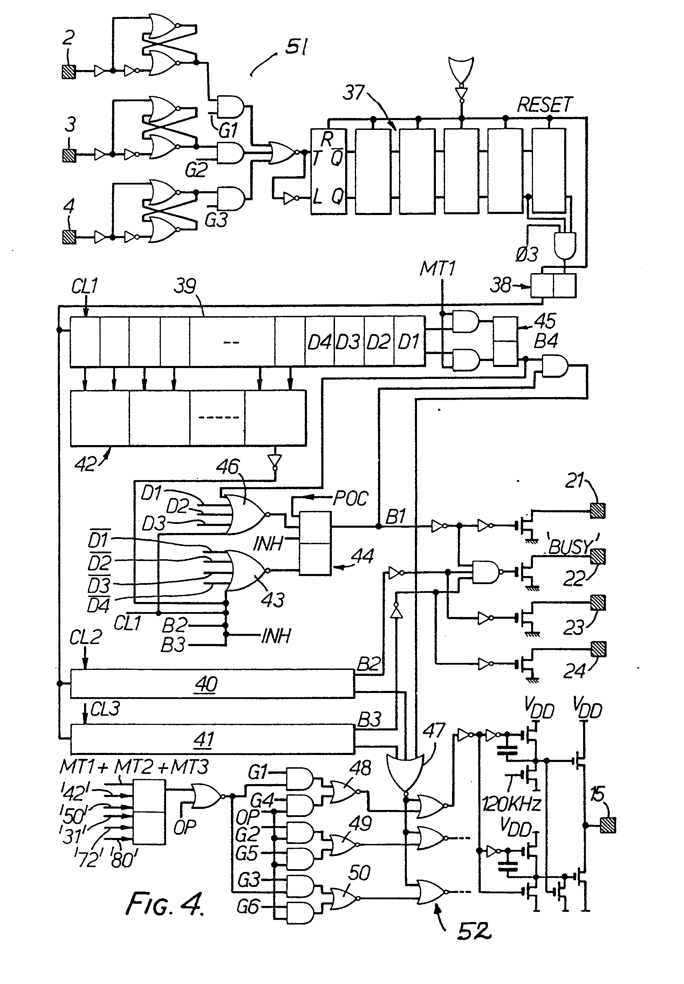

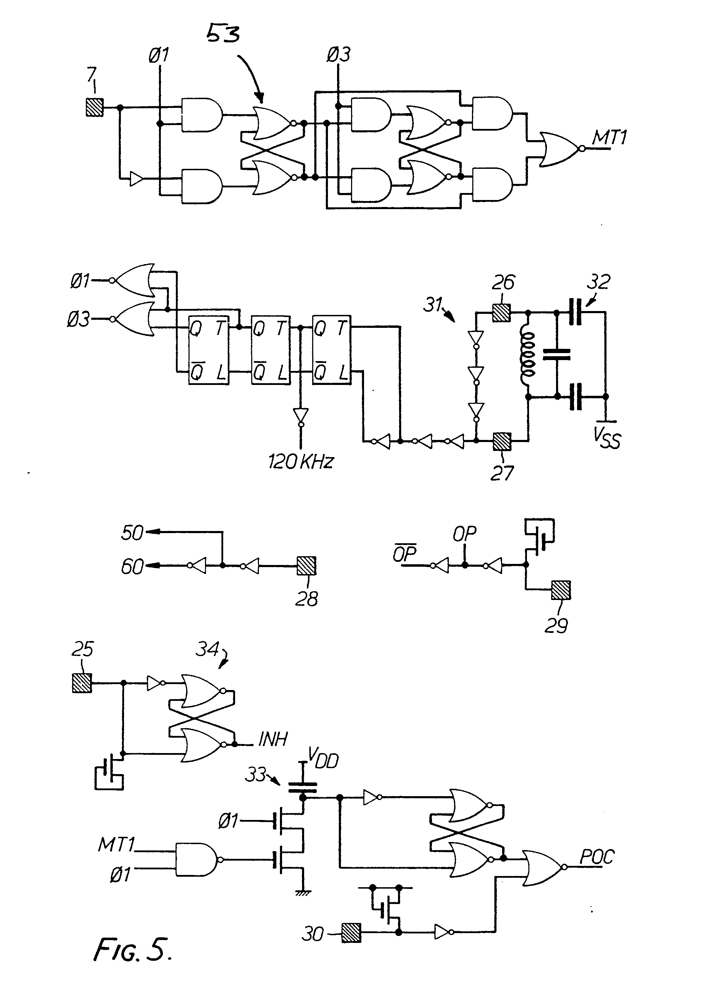

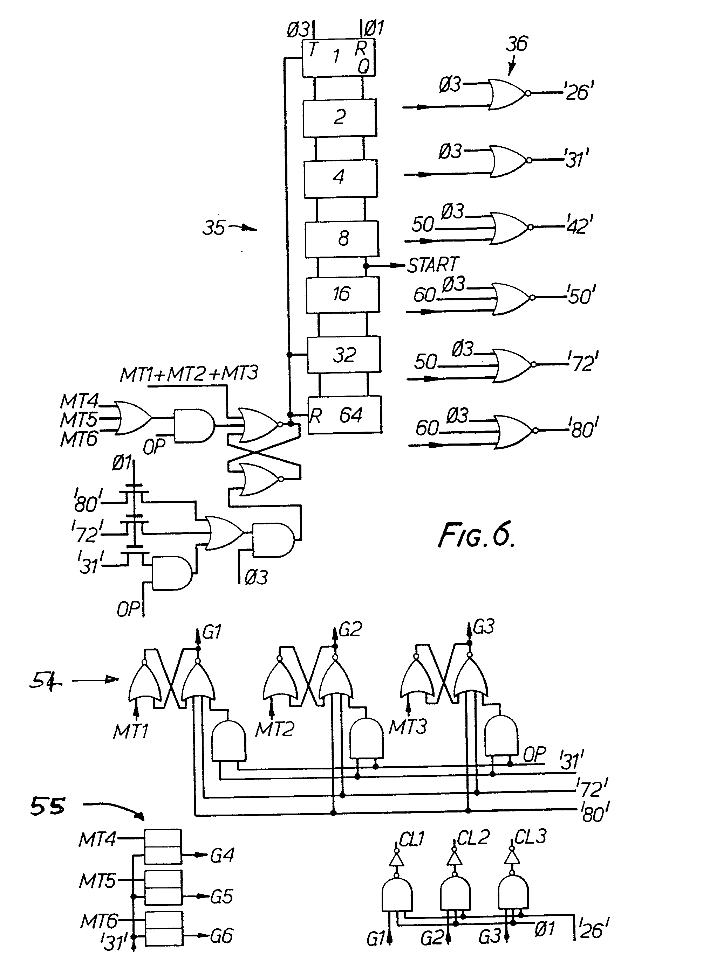

Figures 4 to 6 show details of the integrated circuit itself, Figure 4 showing the main signal path from inputs 2, 3 and 4 through input buffering and gating circuits 51 to output gating circuits 52 and to outputs 15, 16 and 17 (only output 15 is shown for simplicity). Figures 5 and 6 show basic control circuitry. Thus, in Figure 5, the top diagram illustrates one of six circuits 53 connected to trigger inputs 7 to 12 to produce zero-crossing detection signals MT1 to MT6 occurring just after the zero crossings and synchronised with timing signals φ1 and φ3, the latter being derived in Figure 5 from a signal 120KHZ obtained from an oscillator 31 involving an external tuned circuit 32 (Figures 3 and 5). Figure 5 also shows the production of a signal 50 or 60 from data at input 28 to define 50 or 60HZ operation. An option signal OP is generated from input 29 and its function will be described hereinafter. An inhibit signal INH can be generated by a bistable circuit 34 from an input 25. Finally, in Figure 5 there is shown a circuit generating from VDD and a capacitance 33 a power-on-detect signal POC (which may be inhibited for test purposes at input 30).

Referring to Figure 6, counter 35 is used to provide various timing signals '26', '31' etc. delayed from the zero crossings as defined by MT1 to MT6 which reset the counter (MT1 to MT3 only in the mode shown—selected by OP). The count values shown correspond to counts of φ1 decoded by a set of NOR gates 36.

The counter decodes, their times after zero crossing and their function are as follows: 8, 266μ.secs, receive window open; 26, 866μ.secs, close receive window by clocking registers 39 to 41; 31, 1.0m.sec, reset first transmit pulse; 42, 1.38m.sec, start of second transmit pulse (60HZ); 50, 1.66m.sec, start of second transmit pulse (50HZ); 72, 2.40m.sec, end of second transmit pulse (60HZ); and 80, 2.66m.sec, end of second transmit pulse (50HZ).

Gating signals G1 to G6 are shown generated by gating circuits 54 and 55 in Figure 6 for respective phases from MT1 to MT6, and clocking signals CL1 to CL3 for respective input phases from G1 to G3.

The input signals at inputs 2, 3 and 4 are separately gated into a counter 37 by signals G1, G2 and G3. Counter 37 counts the number of cycles at approximately 120KHZ in input signals during a receive window (time slot) identical to that used by the receivers. The window opens 266 microseconds after each zero crossing and closes 600 microseconds later. The window is timed between states 8 and 26 of counter 35. A bistable circuit 38 is set when a count of 48 pulses is received in the 600 microseconds receive window. Thus circuit 38 follows the bit pattern of the received data on all three inputs in turn. Shift registers 39, 40 and 41 are clocked 1 milli-second after the input zero crossing of each input phase. Register 39 relates to phase A, 40 relates to phase B, and 41 to phase C (40 and 41 are shown diagrammatically). As previously described, a complete message lasts for 11 cycles of the A.C line, and consists of a "start code" followed by the 9 bit command or address code. Data appearing at bistable circuit 38 is clocked into the registers 39, 40 and 41. These registers are 22 bits long, so after 11 cycles of the A.C line from the receipt of the first bit of the signal, the "start code" occupies bits 19 to 22 of the register and the command or address code occupies bits 1 to 18.

Three comparators (42 for register 39) check that the code stored in each register at bits 1 to 18 is in the correct format, i.e. the second bit of each pair should be the inverse of the first bit. Gate 43 detects the combination of "start code" stored in bits 19 to 22 and the correct format in bits 1 to 18, and sets bistable circuit 44 to generate signal B1 (B2 and B3 for the other registers) which will allow data to be clocked from register 39 onto all three outputs 15, 16 and 17 through D-type bistable circuits 45.

These bistable circuits are clocked by MT1, MT2 and MT3 respectively and hold the output data valid for 1/2 cycle of the input phases. Signal B1 being set inhibits corresponding signals B2 and B3 for the other phases and so prevents transmission from registers 40 and 41. Similarly, B2 or B3 can inhibit transmission from the other two registers. The register which first receives a valid code will transmit this code onto all 3 repeater outputs during the following 11 mains cycles. During transmission, circuit 38 is held reset and the registers 39, 40 and 41 are cleared down. Signals B1, B2 and B3 are reset by gates 46 which detect logic '0' in bits 20, 21, 22 of the registers. This condition coincides with the end of transmission of the stored first half of the message. Signals B1, B2, B3 are used to drive LEDs at outputs 21, 23 and 24 to provide a visible indication of which channel is repeating. The logical OR of B1, B2, B3 drives the "BUSY" output 22. This can be used to drive a single LED, as an option to the 3 individual LEDs. The I.C. has an external inhibit at 25 to allow for two way transmission between two isolated mains systems. Data from one of the registers is passed through a gate 47 and drives the output push pull stages at 120KHZ. The duration of the 120KHZ bursts is controlled by timing signals applied from gates 48, 49 and 50. The timing signals vary according to which type of output option is selected. A second variation is according to whether 50HZ or 60HZ operation is required, (the 30 deg. phase shift for 50HZ operation corresponds to a delay of 1.66m.secs).

There are three modes of output, selected by an option input to the logic, and also by the method of connection of the mains trigger (zero crossing detect) inputs.

A first mode is 4 wire, single pulse. Option input 29 is set to logic '0' and the input and output zero crossing detectors are connected together so that MT1=MT4, MT2=MT5, MT3=MT6. The output logic '1' then consists of a single 1m.sec. pulse of 120KHZ, starting immediately after the zero crossing of each pulse with respect to neutral. This mode would be used for a normal 3-phase, 4 wire system where the 208V type of operation is not required.

A second mode is the 4 wire, double pulse.

Option input 29 is set to logic '1', and the output zero crossing detectors are not used by the logic. The output logic '1' consists in this case of two 1m.sec pulses of 120KHZ on each phase (Figure 2). The first pulse begins immediately after the zero crossing of the phase, and the second pulse begins 1.4m.secs (30°) after the zero crossing. This mode would be used in 3-phase, 4 wire systems where 208V type connection is required.

The third mode is the 8 wire mode. Option input 29 is set to logic '0'. Signal inputs are received from one A.C system, and outputs applied to another system which is isolated from the first, i.e. MT1 to 3 are asynchronous relative to MT4 to 6.

The output logic '1' consists of a single 1m.sec pulse of 120KHZ on each phase starting immediately after the output zero crossing. This mode could be used to couple signals from a 120V/208V system to a 277V system as described above. The two systems must have the same frequency and they should either be in phase, or have a phase difference of at least 22 deg. The logic does not allow for the corresponding pairs of triggers to be closer than 1m.sec.

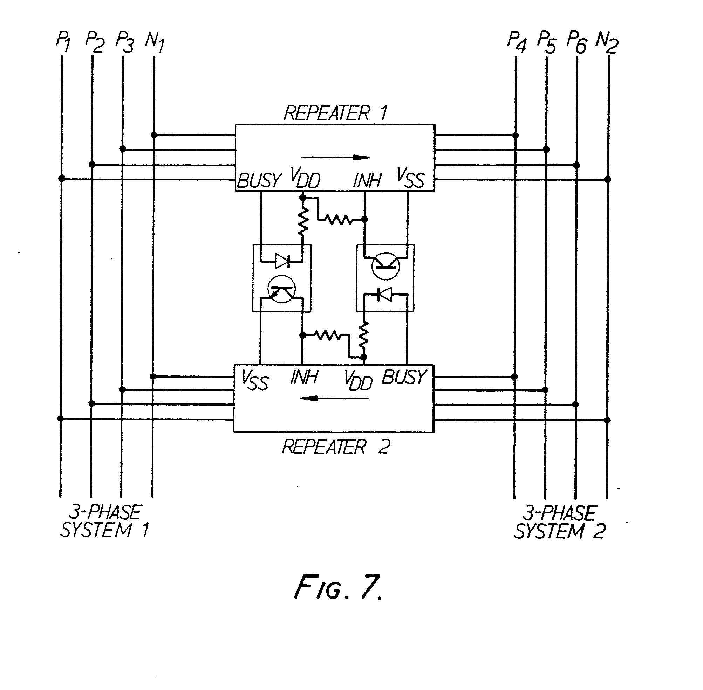

Figure 7 shows the repeater connections in this mode. The repeaters are connected back to back, and the "BUSY" output of each is connected to the inhibit input via an opto-isolator. The inhibit function is necessary to prevent multiple repetitions of the signals between the two systems.

## Claims

1. A repeater for repeating digital control message words transmitted in alternate time intervals of a sequence of time intervals on an A.C power main, the repeater (1) comprising means (51) for coupling to an A.C main to receive therefrom said message words, means (39, 40, 41) for storing said received words, and means (52) for injecting onto the main said stored words with increased amplitude in the intermediate time intervals of said sequence of time intervals, so that the message words are retransmitted on the A.C main interleaved in time with the received words, characterised in that the repeater (1) is arranged to operate with a multiphase power main having $n$ phases (A, B, C) to receive a message word from one section of the main and retransmit the message word onto another, or the same, section of the main and comprises input zero-crossing detection means (53, MT1-MT3) for detecting the moments at which the voltages on the $n$ phases of said one section of the main pass through zero, data input means (37, 38) for cooperating with the input detection means (53, MT1-MT3) to identify the bits of a received word on any of the $n$ phases and to store those bits in the storing means (39, 40, 41), output zero-crossing detection means (53, MT4-MT6) for detecting the moments at which the voltages of the $n$ phases of said another section pass through zero, and time slot defining means (35, 36) for defining, in dependence upon said moments detected by the input or output zero-crossing detection means, output time slots for each of the $n$ phases for the bits of the retransmitted words in said intermediate time intervals.

2. A repeater as claimed in Claim 1, and comprising gating signal means (54) for producing input gating signals (G1-G3) in dependence upon the input zero-crossing detection means (53, MT1-MT3) to gate only one phase at a time to the data input means (37, 38).

3 A repeater as claimed in Claim 1 or 2, wherein said time slot defining means comprises means (54, CL1-CL3) to define input time slots synchronised with the respective $n$ phases of said one power main section.

4. A repeater as claimed in Claim 3, wherein the data input means comprises means (37) for counting cycles modulated on each phase of said one power main section and bit defining means (38) for defining one or other of two bit values for a phase in dependence upon whether or not the counting means (37) reaches a predetermined count in the associated time slot.

5. A repeater as claimed in Claim 4, wherein the storage means comprises a register (39, 40, 41) for each of the $n$ phases and coupled to the bit defining means (38) to receive the defined bit value.

6. A repeater as claimed in Claim 5, and comprising register clocking means (CL1-CL3) for clocking each register when the associated input time slot terminates, thereby to build up in each register a series of bit values corresponding to the cycle counts at the ends of successive input time slots of the associated phase.

7. A repeater as claimed in any one of Claims 1 to 6, wherein the time slot defining means comprises a clock generator ($\phi1$, $\phi3$) for generating a clocking pulse train at a frequency which is high in comparison with the frequency of the power main system, a counter (35) coupled to the zero-crossing detection means to count said clocking pulse train from zero-crossing moments detected by the zero-crossing detection means, and means (36) for detecting predetermined counts of said counter (35) to define the starts and ends of time slots.

8. A repeater as claimed in Claim 7, operable with a system in which the one and another power main sections are of the same power main, and comprising an input (29) to receive a signal to prevent the output zero-crossing detection means from acting upon said counter (35).

9. A repeater as claimed in any one of Claims 1 to 8, the repeater comprising an input (29) for supplying to the repeater a command signal and control means for controlling the time slot defining means in dependence upon the command signal such that, with one state of the command signal, the output time slots are defined by said input zero-crossing detection means (53, MT1-MT3) and, with another state of the command signal, the output time slots are defined by said output zero-crossing detection means (53, MT4-MT6).

10. A repeater as claimed in any one of Claims 1 to 9, wherein the time slot defining means comprises means (36) for defining two separate output time slots for each bit, whereby each bit is transmitted twice, and for defining the separation of said time slots such that the second transmission of a bit occurs substantially 30° after the first transmission of the bit at a given power mains frequency.

11. A repeater according to Claim 10, for use at two alternative predetermined power main frequencies, the repeater comprising an input (28) to receive a selection signal to select either one of said frequencies, the time slot defining means comprising a counter (35) for counting at a fixed frequency, and selection means (36) operable in dependence upon the selection signal to select one of two predetermined counts corresponding to a 30° phase shift at the selected one of said predetermined power main frequencies.

## Patentansprüche

1. Rückübertrager zum Rückübertragen digitaler Steuer-Meldungswörter, die in wechselnden Zeitintervallen einer Reihe von Zeitintervallen auf einer Wechselstrom-Starkstromleitung übertragen werden, welcher Rückübertrager (1) Mittel (51) zum Ankoppeln an die Wechselstrom-Starkstromleitung, um von dieser die Meldungswörter zu empfangen, Mittel (39, 40, 41) zum Speichern der empfangenen Meldungswörter und Mittel (52) zum Einspeisen der gespeicherten Meldungswörter in die Starkstromleitung mit erhöhter Amplitude in den zwischenliegenden Zeitintervallen der Reihe von Zeitintervallen, so daß die Meldungswörter auf der Starkstromleitung zeitlich zwischen die empfangenen Meldungswörter eingefügt rückübertragen werden, enthält, dadurch gekennzeichnet, daß der Rückübertrager (1) derart eingerichtet ist, daß er mit einer Mehrphasen-Starkstrom leitung zusammenarbeitet, die $n$ Phasen (A, B, C) hat, um ein Meldungswort von einem Abschnitt der Starkstromleitung zu empfangen und das Meldungswort zu einem anderen oder demselben Abschnitt der Starkstromleitung rückzuübertragen, und Eingangs-Nulldurchgangs-Erfassungsmittel (53, MT1-MT3) zum Erfassen der Augenblicke, in denen die Spannungen der $n$ Phasen des betreffenden Abschnitts der Starkstromleitung durch Null gehen, Dateneingabemittel (37, 38) zum Zusammenarbeiten mit den Eingangs-Nulldurchgangs-Erfassungsmitteln (53, MT1-MT3), um die Bits eines auf jeder der $n$ Phasen empfangenen Meldungsworts zu erkennen und diese Bits in den Mitteln zum Speichern (39, 40, 41) zu speichern, Ausgangs-Nulldurchgangs-Erfassungsmittel (53, MT4-MT6) zum Erfassen der Augenblicke, in denen die Spannungen der $n$ Phasen des anderen Abschnitts durch Null gehen, sowie Zeitschlitz Definierungsmittel (35, 36) zum Definieren von Zeitschlitzen für jede der $n$ Phasen für die Bits der rückübertragenen Meldungswörter in den zwischenliegenden Zeitintervallen in Abhängigkiet von den Augenblicken, die durch die Eingangs- u. Ausgangq-Nulldurchgangs-Erfassungsmittel erfaßt werden, enthält.

2. Rückübertrager nach Anspruch 1, mit einer Gattersignal-Erzeugungseinrichtung (54) zum Erzeugen von Eingabe-Gattersignalen (G1-G3) in Abhängigkeit von den Eingangs-Nulldurchgangs-Erfassungsmitteln (53, MT1-MT3), um nur eine Phase auf einmal zu den Dateneingabemitteln (37, 38) durchzuschalten.

3. Rückübertrager nach Anspruch 1 oder 2, bei dem die Zeitschlitz-Definierungsmittel Mittel (54, CL1-CL3) zum Definieren von Zeitschlitzen enthalten, die mit den $n$ Phasen des Starkstromleitungs-Abschnitts synchronisiert sind.

4. Rückübertrager nach Anspruch 3, bei dem die Dateneingabemittel ein Mittel (37) zum Abzählen von Perioden, die in jeder Phase des Starkstromleitungs-Abschnitts moduliert sind, und ein Bitdefinierungsmittel (38) zum Definieren des einen oder des anderen von zwei Bitwerten für eine Phase in Abhängigkeit davon, ob das Mittel zum Abzählen (37) einen vorbestimmten Zählstand in dem zugeordneten Zeitschlitz erreicht oder nicht erreicht, enthalten.

5. Rückübertrager nach Anspruch 4, bei dem die Mittel zum Speicheren ein Register (39, 40, 41) für jede der $n$ Phasen enthalten und mit dem Bitdefinierungsmittel (38) gekoppelt sind, um den definierten Bitwert zu empfangen.

6. Rückübertrager nach Anspruch 5, mit einer Register-Taktsteuerung (CL1-CL3) zum Takten jedes Registers, wenn der zugeordnete Zeitschlitz endet, um dadurch in jedem Register eine Reihe von Bitwerten zu erstellen, die mit den Perioden-Zählständen an den Enden aufeinanderfolgender Eingabe-Zeitschlize der zugeordneten Phase korrespondieren.

7. Rückübertrager nach einem der Ansprüche 1 bis 6, bei dem die Zeitschlitz-Definierungsmittel einen Taktgenerator ($\phi$1, $\phi$3) zum Erzeugen eine Taktungsimpulsreihe bei einer Frequenz, die im Vergleich zu der Frequenz des Starkstromleitungssystems hoch ist, einen Zähler (35), der mit den Nulldurchgangs-Erfassungsmitteln gekoppelt ist, um die Taktungsimpulsreihe von den Augenblicken der Nulldurchgänge aus abzuzählen, die durch die Nulldurchgangs-Erfassungsmittel erfaßt werden, und ein Mittel (36) zum Erfassen vorbestimmter Zählstände des Zählers (35), um die Beginn- und Endzeitpunkte der Zeitschlitze zu definieren, enthalten.

8. Rückübertrager nach Anspruch 7, der mit einem System betreibbar ist, in welchem der eine und ein weiterer Starkstromleitungs-Abschnitt zu demselben Starkstromnetz gehören, und der einen Eingang (29) zum Empfangen eines Signals aufweist, das verhindert, daß die Ausgangssignale der Nulldurchgangs-Erfassungsmittel auf den Zähler (35) einwirken.

9. Rückübertrager nach einem der Ansprüche 1 bis 8, welcher Rückübertrager einen Eingang (29) zum Anlegen eines Steuersignals an den Rückübertrager und eine Steuerungsmittel zum Steuern der Zeitschlitz-Definierungsmittel in Abhängigkeit von dem Steuersignal derart, daß bei einem Zustand des Steuersignals die Ausgabe-Zeitschlitze durch die Eingangs-Nulldurchgangs-Erfassungsmittel (53, MT1-MT3) und bei einem anderen Zustand des Steuersignals die Ausgabe-Zeitschlitze durch die Ausgangs-Nulldurchgangs-Erfassungsmittel (53, MT4-MT6) definiert werden, enthält.

10. Rückübertrager nach einem der Ansprüche 1 bis 9, bei dem die Zeitschlitz-Definierungsmittel ein Mittel (36) zum Definieren zweier getrennter Ausgabe-Zeitschlitze für jedes Bit, wodurch jedes Bit zweimal übertragen wird, und zum Definieren der Trennung der Zeitschlitze derart, daß die zweite Übertragung eines Bits im wesentlichen um 30° verschoben nach der ersten Übertragung des Bits bei einer gegebenen Starkstromnetzfrequenz erfolgt, enthält.

11. Rückübertrager nach Anspruch 10, zur Verwendung bei zwei alternativen vorbestimmten Starkstromnetzfrequenzen, welcher Rückübertrager einen Eingang (28) zum Empfangen eines Auswahlsignals zum Auswählen einer der beiden Frequenzen enthält, wobei die Zeitschlitz-Definierungsmittel einen Zähler (35) zum Abzählen bei einer festen Frequenz enthalten und ein Auswahlmittel (36) vorgesehen ist, das in Abhängigkeit von dem Auswahlsignal betreibbar ist, um einen der zwei vorbestimmten Zählstände, die mit einer 30°-Phasenverschiebung bei der ausgewählten der vorbestimmten Starkstromnetzfrequenzen korrespondieren, auszuwählen.

**Revendications**

1. Répéteur pour la répétition de mots de message de commande numérique transmis en des intervalles de temps alternés d'une séquence d'intervalles de temps sur un réseau d'alimentation à courant alternatif, le répéteur (1) comprenant un moyen (51) de couplage à un réseau à courant alternatif permettant d'en recevoir lesdits mots de message, un moyen (39, 40, 41) de mémorisation desdits mots reçus, et un moyen (52) propre à injecter sur le réseau lesdits mots mémorisés avec une amplitude accrue dans les intervalles de temps intermédiaires de ladite séquence d'intervalles de temps, de sorte que lest mots de message se trouvent retransmis sur le réseau à courant alternatif en imbrication temporelle avec les mots reçus, caractérisé en ce que le répéteur (1) est agencé de manière à fonctionner avec un réseau d'alimentation polyphasé comportant n phases (A, B, C) pour recevoir un mot de message d'une première section du réseau et retransmettre le mot de message sur une autre, ou sur la même, section du réseau et comprend un moyen de détection de passage par zéro d'entrée (53, MT1-MT3) propre à détecteur les moments auxquels les tensions électriques sur les n phases de ladite première section du réseau passent par zéro, un moyen d'entrée de données (37, 38) propre à coopérer avec le moyen de détection d'entrée (53, MIT1-MT3) pour identifier les bits d'un mot reçu sur l'une quelconque des n phases et pour charger ces bits dans le moyen de mémorisation (39, 40, 41), un moyen de détection de passage par zéro de sortie (53, MT4-MT6) propre à détecter les moments auxquels les tensions électriques des n phases de ladite autre section passent par zéro, et un moyen de définition de créneaux temporels (35, 36) propre à définir, en fonction desdits moments détectés par le moyen de détection de passage par zéro d'entrée ou de sortie, des créneaux temporels de sortie pour chacune des n phases pour les bits des mots retransmis dans lesdits intervalles temporels intermédiaires.

2. Répéteur selon la revendication 1, et comprenant un moyen à signaux d'aiguillage (54) propre à fournir des signaux d'aiguillage d'entrée (G1-G3) sous la dépendance du moyen de détection de passage par zéro d'entrée (53, MT1-MT3) afin de n'aiguiller qu'une phase à la fois sur le moyen d'entrée de données (37, 38).

3. Répéteur selon la revendication 1 ou 2, dans lequel ledit moyen de définition de créneaux temporels comprend un moyen (54, CL1-CL3) propre à définir des créneaux temporels d'entrée synchronisés avec les n phases respectives de ladite première section de réseau d'alimentation.

4. Répéteur selon la revendication 3, dans lequel le moyen d'entrée de données comprend un moyen (37) propre à compter des périodes modulées sur chaque phase de ladite première section de réseau d'alimentation et un moyen de définition de bits (38) propre à définir l'une ou l'autre de deux valeurs de bit pour une phase selon que le moyen compteur (37) atteint on non un total de comptage prédéterminé dans le créneau temporel associé.

5. Répéteur selon la revendication 4, dans lequel le moyen de mémorisation comprend un registre (39, 40, 41) pour chacune des n phases et couplé au moyen de définition de bits (38) de manière à recevoir la valeur de bit définie.

6. Répéteur selon la revendication 5, et comprenant des moyens de synchronisation de registres (CL1-CL3) propres à pulser chaque registre lorsque prend fin le créneau temporel d'entrée associé, pour accumuler ainsi dans chaque registre une suite de valeurs de bits correspondant aux totaux de périodes à la fin des créneaux temporels d'entrée successifs de la phase associée.

7. Répéteur selon l'une quelconque des revendications 1 à 6, dans lequel le moyen de définition de créneaux temporels comprend un générateur de synchronisation ($\phi$1, $\phi$3) proper à générer un train d'impulsions de synchronisation à une fréquence qui est grande comparativement à la fréquence du réseau d'alimentation, un compteur (35) couplé aux moyens de détection de passage par zéro de manière à compter ledit train d'impulsions de synchronisation à partir des moments de passage par zéro détectés par les moyens de détection de passage par zéro, et un moyen (36) propre à détecter des totaux prédéterminés dudit compteur (35) pour définir le début et la fin des créneaux temporels.

8. Répéteur selon la revendication 7, exploitable avec un système dans lequel la première et l'autre sections de réseau d'alimentation appartiennent au même réseau d'alimentation, et comprenant une entrée (29) pour la réception d'un signal visant à empêcher le moyen de détection de passage par zéro de sortie d'agir sur ledit compteur (35).

9. Répéteur selon l'une quelconque des revendication 1 à 8, le répéteur comprenant un entree (29) destinée à fournir au répéteur un signal de commande et un moyen de commande propre à commander le moyen de définition de créneaux temporels sous la dépendance du signal de commande de telle manière que pour l'un des états du signal de commande les créneaux temporels de sortie soient définis par ledit moyen de détection de passage par zéro d'entrée (53, MT1-MT3) et que, pour un autre état du signal de commande, les créneaux temporels de sortie soient définis par ledit moyen de détection de passage par zéro de sortie (53, MT4-MT6).

10. Répéteur selon l'une quelconque des revendications 1 à 9, dans lequel le moyen de définition de créneaux temporels comprend un moyen (36) propre à définir deux créneaux temporels de sortie séparés pour chaque bit, chaque bit se trouvant ainsi transmis deux fois, et à définir la séparation desdits créneaux temporels de telle manière que la deuxième transmission d'un bit ait lieu sensiblement 30° après la première transmission du bit pour une fréquence donnée du réseau d'alimentation.

11. Répéteur selon la revendication 10, destiné à opérer à deux fréquences possibles principales prédéterminées du réseau d'alimentation, le répéteur comprenant une entrée (28) propre à recevoir un signal de sélection visant à sélectionner l'une ou l'autre desdites fréquences, le moyen de définition de crénaux temporels comprenant un compteur (35) propre à compter à une fréquence fixe, et un moyen sélecteur (36) propre à réagir au signal de sélection pour sélectionner l'un de deux totaux de comptage prédéterminés correspondant à un déphasage de 30° à celle desdites fréquences de réseau d'alimentation prédéterminées qui est sélectionnée.

FIG. I.

FIG. 2.

FIG. 3.

**0 091 290**

*Fig. 4.*

4

FIG. 5.

FIG.6.

*F*IG. 7.